# EUROPÄISCHE PATENTSCHRIFT

(11) **EP 3 395 547 B1**
(45) Veröffentlichungstag und Bekanntmachung des Hinweises auf die Patenterteilung: **12.02.2020**
(21) Anmeldenummer: 17168659.5
(22) Anmeldetag: 28.04.2017
(51) Int. Cl.: B29C 65/16

(54) **LASERFÜGEVERFAHREN UND LASERFÜGESYSTEM ZUM VERSCHWEISSEN VON WERKSTÜCKEN**
LASER JOINING METHOD AND LASER JOINING SYSTEM FOR WELDING WORKPIECES
PROCÉDÉ ET SYSTÈME DE SOUDAGE LASER DESTINÉS À SOUDER DES PIÈCES USINÉES

(43) Veröffentlichungstag der Anmeldung: 31.10.2018
(73) Patentinhaber: Leister Technologies AG, 6056 Kägiswil (CH)
(72) Erfinder: Didden, Thomas, 6373 Ennetbürgen (CH); Wenzlau, Carsten, 6055 Alpnach (CH); Pfleger, Pascal, 6072 Sachseln (CH)
(74) Vertreter: Klocke, Peter

(56) Entgegenhaltungen:
- EP-A1- 0 997 261
- EP-A1- 2 949 452
- WO-A1-2017/020890
- JP-A- 2007 313 821
- JP-A- 2009 056 755
- JP-A- 2012 187 897
- US-A1- 2006 134 994

## Beschreibung

Die Erfindung betrifft ein Laserfügeverfahren zum Verbinden von verschiedenen Werkstücken aus Kunststoff oder Kunststoff mit anderen Materialien, wobei das der Laserquelle zugewandte erste Werkstück aus einem für den Laserstrahl transparenten Material und das andere zweite Werkstück aus einem für den Laserstrahl absorbierenden Material oder aus einem für den Laserstrahl transparenten Material mit einer absorbierenden Beschichtung oder mit einer absorbierenden Zwischenfolie besteht, sodass die aneinander angrenzenden Verbindungskontaktflächen der beiden Werkstücke unter Einwirkung von Laserlicht aufschmelzen und bei der anschließenden Abkühlung unter Druckausübung sich miteinander verbinden, und die zu verbindenden Werkstücke zur Druckausübung mittels einer Spanneinrichtung aneinander gepresst werden, wozu die Werkstücke zwischen einem Stützelement und einem mit einer Spannkraft beaufschlagbaren, das erste Werkstück übergreifenden sowie für Laserlicht größtenteils transparenten Spannelement angeordnet werden, und wobei eine Maskenstrukturen aufweisende Maske verwendet wird, die nur im Bereich der Verbindungskontaktflächen für Laserlicht durchlässig ist, um bei dem zweiten Werkstück lediglich die Verbindungskontaktflächen zu plastifizieren, wobei die Maskenstrukturen größer sind als die verwendete Wellenlänge des Laserstrahls, und der Laserstrahl entweder linienförmig geformt und relativ zu den Werkstücken und der Maske bewegt wird oder flächig geformt und stillstehend auf die Werkstücke und die Maske gerichtet wird, und wobei zumindest das der Laserquelle zugewandte erste Werkstück von einem dreidimensionalen Formteil gebildet wird, das zumindest auf der dem Spannelement zugewandten ersten Konturseite und/oder auf der dem zweiten Werkstück zugewandten zweiten Konturseite uneben ist und das Spannelement an seiner Anlageseite an die erste Konturseite des ersten Werkstücks angepasst ist.

Die Erfindung betrifft außerdem ein Laserfügesystem mit einer Laserfügevorrichtung zum Verbinden von verschiedenen Werkstücken aus Kunststoff oder Kunststoff mit anderen Materialien, mit den Merkmalen des Oberbegriffes des Patentanspruchs 6, die zur Durchführung des vorstehend beschriebenen Verfahrens geeignet ist.

Laserdurchstrahlschweißen mit Verwendung einer Maske (Maskenschweissen) zur Abschattung der nicht zu verschweissende Bereiche ist Stand der Technik und wird insbesondere bei 2D-Werkstücken oder bei relativ flachen 3D-Werkstücken erfolgreich eingesetzt. Mittels eines linienförmigen Laserstrahls werden dabei die Informationen der strukturierten Maske auf die darunter liegenden Werkstücke übertragen. Im Bereich der strukturierten Flächen der Maske transmittiert die Laserstrahlung und trifft auf die Werkstücke, während im Bereich der nicht strukturierten Oberfläche der Maske die Werkstücke hingegen abgeschattet sind und so die Laserstrahlung die Werkstücke nicht erreicht. Häufig wird als Maske dabei eine metallisierte Glasplatte benutzt, in die die Informationen der Schweisskontur durch Strukturieren eingebracht sind. Dies kann beispielsweise entweder durch Ätzen oder durch Laserablation geschehen.

Aus der EP 0 997 261 A1 ist ein gattungsgemäßes Laserfügeverfahren und eine Vorrichtung zum Verbinden von verschiedenen Werkstücken aus Kunststoff oder Kunststoff mit anderen Materialien bekannt, wobei das obere, der Laserquelle zugewandte Werkstück aus einem für den Laserstrahl transparenten Material und das zweite Werkstück aus einem für den Laserstrahl absorbierenden Material besteht, sodass die aneinander angrenzenden Kontaktflächen der beiden Werkstücke aufschmelzen und bei der anschließenden Abkühlung unter Druck sich miteinander verbinden. Dabei wird bzw. ist zwischen der Laserquelle und den zu verbindenden Werkstücken zur Verbindung der Werkstücke in einem bestimmten Fügebereich der Kontaktfläche eine Maske aus einem laserundurchlässigen Material angeordnet, deren Maskenstrukturen größer sind als die verwendete Wellenlänge des Laserstrahls, wobei die Laserquelle derart auf die Kontaktfläche eingestellt wird bzw. ist, dass an dieser eine Linie entsteht, und der Laserstrahl und die Maske zusammen mit den Werkstücken oder der Laserstrahl zusammen mit der Maske und den Werkstücken bewegt werden.

Ist zumindest das erste transparente 3D-Werkstück nicht relativ flach ausgebildet, sondern weist einen Höhe von einigen Zentimetern auf, und besitzen die zu verbindenden Werkstücke insbesondere ausgeprägte gegenüber der horizontalen geneigte Freiformflächen, so stösst das aus der EP 0 997 261 A1 bekannte herkömmliche Maskenschweissen aber an Grenzen. Dies ist dadurch bedingt, dass bei diesem herkömmlichen Maskenschweißen sich die Maske oberhalb des höchsten Punktes der Freiformfläche befindet, und in der Regel mit einem Höhenabstand zu diesem angeordnet ist. Aufgrund einer nicht ganz vermeidbare Divergenz des Laserstrahls gilt, dass je weiter die Maske von der Schweissebene entfernt ist, desto kleiner muss die Struktur der Maske gewählt werden, um die geforderte Abbildung darzustellen. Ferner gilt, dass je weiter die Maske von der Schweissebene entfernt ist, desto eher wird das Abbild durch Brechungen an unterschiedlichen Materialien zwischen Maske und Schweißebene gestört. Die Abbildungsgenauigkeit wird also mit zunehmendem Abstand zwischen Maske und Schweissebene schlechter und ist zusätzlich von der Divergenz der Strahlquelle abhängig. Beim herkömmlichen Maskenschweissen spielen somit die Strukturgrösse, die Abschattungen und die Werkstückhöhe eine wichtige Rolle und stellen wesentliche Grenzen betreffend der Anwendbarkeit dar.

Davon ausgehend liegt der Erfindung die Aufgabe zugrunde, das bekannte Maskenschweißverfahren derart weiter zu entwickeln, dass auch nicht relativ flach ausgebildete 3D-Werkstücke, speziell mit ausgeprägten Freiformflächen, insbesondere auf der oberen, dem Laser zugewandten Seite des transparenten Werkstücks effizient und verlässlich verschweisst werden können.

Diese Aufgabe wird erfindungsgemäß durch ein Laserfügeverfahren mit den Merkmalen des unabhängigen Patentanspruchs 1 und durch ein Laserfügesystem mit den Merkmalen des nebengeordneten unabhängigen Patentanspruchs 6 gelöst.

Bei dem vorgeschlagenen Laserfügeverfahren zum Verbinden von verschiedenen Werkstücken aus Kunststoff oder Kunststoff mit anderen Materialien werden erfindungsgemäß die Maskenstrukturen an der dem ersten Werkstück zugewandten Anlageseite des Spannelements und/oder an der dem zweiten Werkstück zugewandten zweiten Konturseite des ersten Werkstücks ausgebildet.

Dabei werden Werkstücke verwendet, von denen das der Laserquelle zugewandte erste Werkstück aus einem für den Laserstrahl transparenten Material und das andere zweite Werkstück aus einem für den Laserstrahl absorbierenden Material oder aus einem für den Laserstrahl transparenten Material mit einer absorbierenden Beschichtung oder mit einer absorbierenden Zwischenfolie besteht, sodass die aneinander angrenzenden zu Verbindungskontaktflächen der beiden Werkstücke unter Einwirkung von Laserlicht aufschmelzen und bei der anschließenden Abkühlung unter Druckausübung sich miteinander verbinden. Dazu werden die zu verbindenden Werkstücke zur Druckausübung mittels einer Spanneinrichtung aneinander gepresst, wobei die Werkstücke zwischen einem Stützelement und einem mit einer Spannkraft beaufschlagbaren, das erste Werkstück übergreifenden sowie für Laserlicht größtenteils transparenten Spannelement angeordnet werden.

Die Maskenstrukturen, an der dem ersten Werkstück zugewandten Anlageseite des Spannelements und/oder an der dem zweiten Werkstück zugewandten zweiten Konturseite des ersten Werkstücks, sind nur im Bereich der Verbindungskontaktflächen für Laserlicht durchlässig, um bei dem zweiten Werkstück lediglich die Verbindungskontaktflächen zu plastifizieren, wobei die Maskenstrukturen größer sind als die verwendete Wellenlänge des Laserstrahls. Es wird bei dem erfindungsgemäßen Laserfügeverfahren ein Laserstrahl verwendet, der linienförmig oder flächig geformt ist. Im ersten Fall wird der Laserstrahl relativ zu den Werkstücken und der Maske bewegt, im zweiten Fall stillstehend auf die Werkstücke und die Maske gerichtet. In beiden vorstehend genannten Fällen wird ein der Laserquelle zugewandtes erstes Werkstück verwendet, das als dreidimensionales Formteil ausgebildet ist. Dieses dreidimensionale Formteil ist auf der dem Spannelement zugewandten erste Konturseite und/oder auf der dem zweiten Werkstück zugewandten zweite Konturseite uneben, d.h. es weist dort Vorsprünge und/oder Ausnehmungen auf. Dabei ist das Spannelement an seiner Anlageseite für das erste Werkstück an die erste Konturseite des ersten Werkstücks, d.h. auf der dem zweiten Werkstück abgewandten Seite, angepasst. Ist das erste Werkstück auf der zur Laserquelle weisenden Seite ohne Vertiefungen und Erhöhungen ausgebildet, sodass die entsprechende erste Konturseite eben ist, so ist die zugeordnete Anlageseite des Spannelements vorzugsweise ebenfalls plan ausgebildet. Weist das das erste Werkstück auf der zur Laserquelle weisenden Seite Vertiefungen und Erhöhungen auf, so ist die dieser ersten Konturseite zugeordnete Anlageseite des Spannelements vorzugsweise entsprechend uneben ausgebildet. Dies bewirkt zum einen, dass das Spannelement vollständig an dem ersten Werkstück anliegt und dass zum anderen das erste Werkstück gleichmäßig mit der Spannkraft beaufschlagt wird, und so die beiden Werkstücke zwischen dem Stützelement und dem Spannelement der Spanneinrichtung derart gespannt werden, dass überall an den Verbindungskontaktstellen der Werkstücke ein weitgehend identischer Kontaktdruck besteht und aufrecht erhalten werden kann.

Indem die Maskenstrukturen an der dem ersten Werkstück zugewandten Anlageseite des Spannelements und/oder an der dem zweiten Werkstück zugewandten zweiten Konturseite des ersten Werkstücks ausgebildet werden, sind die Maskenstrukturen am höchsten Punkt der Freiformfläche des ersten Werkstücks und/oder unterhalb davon angeordnet. Trotz der nicht ganz vermeidbaren Divergenz des Laserstrahls wird dadurch die Gefahr möglicher Brechungen an unterschiedlichen Materialien zwischen Maske und Schweißebene reduziert und so die Abbildungsgenauigkeit im Bereich der Verbindungskontaktstellen der Werkstücke verbessert.

Vorzugsweise wird die Anlageseite des Spannelements an die zugewandte erste Konturseite des ersten Werkstücks zumindest teilweise als Negativform der zugewandten ersten Konturseite des ersten Werkstücks ausgeführt. Damit wird erreicht, dass sich das Spannelement und das erste Werkstück über die gesamte Anlageseite des Spannelements und die gesamte zum Laserquelle weisenden ersten Konturseite des ersten Werkstücks gegeneinander abstützen, sodass das in der Regel gegenüber dem Spannelement nachgiebigere erste Werkstück formstabil gehalten wird.

Bei einer bevorzugten Ausführungsform des erfindungsgemäßen Laserfügeverfahrens wird für die Ausbildung der Maskenstrukturen für Laserlicht undurchlässiges Material auf die dem ersten Werkstück zugewandte Anlageseite des Spannelements oder auf die dem zweiten Werkstück zugewandte zweite Konturseite des ersten Werkstücks aufgebracht. Das Laserlicht undurchlässige Material bewirkt eine Abschattung der Werksstücke neben den Verbindungskontaktstellen der Werkstücke und hält das Laserlicht des Laserstahls zumindest von dem zweiten Werkstück fern, das aus einem für den Laserstrahl absorbierenden Material oder aus einem für den Laserstrahl transparenten Material mit einer absorbierenden Beschichtung oder mit einer absorbierenden Zwischenfolie besteht. Für das Laserlicht undurchlässiges Material kann beispielsweise Laserlicht absorbierendes oder Laserlicht streuendes oder reflektierendes Material verwendet werden. Vorzugsweise wird für die Ausbildung der Maskenstrukturen Laserlicht reflektierendes Material verwendet. Dies hat den Vorteil, dass sich weder das Spannelement noch das erste Werkstück durch den Laserstrahl dort örtlich erwärmt werden.

Bei einer vorteilhaften Ausführungsform des erfindungsgemäßen Laserfügeverfahrens wird die der Laserquelle zugewandte Seitenfläche des Spannelements eben ausgebildet und die Laserstrahlung näherungsweise senkrecht auf diese Seitenfläche gerichtet. Dies begünstigt den Durchtritt des Laserstahls durch das Spannelement und verhindert unerwünschte Rückreflektionen, Streuungen und Beugungen des Laserlichtes des Laserstrahls an der der Laserquelle zugewandte Seitenfläche des Spannelementes.

Erfindungsgemäß sind bei der vorgeschlagenen Laserfügevorrichtung zum Verbinden von verschiedenen Werkstücken aus Kunststoff oder Kunststoff mit anderen Materialien, die Maskenstrukturen an der dem ersten Werkstück zugewandten Anlageseite des Spannelements und/oder an der dem zweiten Werkstück zugewandten zweiten Konturseite des ersten Werkstücks ausgebildet. Vorzugsweise ist dabei die Anlageseite des Spannelements an die zugewandte erste Konturseite des ersten Werkstücks zumindest teilweise als Negativform der zugewandten ersten Konturseite des ersten Werkstücks ausgeführt. Es hat sich als besonders günstig erwiesen, wenn die ausgebildeten Maskenstrukturen Laserlicht undurchlässiges Material aufweisen, die an der dem ersten Werkstück zugewandten Anlageseite des Spannelements und/oder an der dem zweiten Werkstück zugewandten zweiten Konturseite des ersten Werkstücks angeordnet ist. Besonders geeignet für die ausgebildeten Maskenstrukturen ist Laserlicht reflektierendes Material. Weiterhin ist es nützlich, die der Laserquelle zugewandte Seitenfläche des Spannelements eben auszubilden und die Laserstrahlung näherungsweise senkrecht auf diese Seitenfläche zu richten.

Das erfindungsgemäße Laserfügeverfahren bzw. die erfindungsgemäße Laserfügevorrichtung deckt insbesondere folgende drei Fälle ab, nämlich zum einen das Schweißen in einer Ebene mit einem 3D-geformten, transparenten Werkstück und Andruck in einer Ebene, zum anderen das Schweißen in einer Ebene mit einem 3D-geformten transparenten Werkstück und Andruck durch das 3D-geformte transparente Werkstück, und zudem auch das Schweissen von Freiformflächen im absorbierenden und transparenten Werkstück und Andruck über das 3D-geformte transparente Werkstück.

Der Erfindung liegen die folgenden drei ineinander greifenden Kerngedanken zugrunde.

Zum Ersten, das Spannelement der Spanneinrichtung als 3D-Stempel auszuführen, der aus für die Laserstrahlung transparentem Kunststoff besteht. Dieser wird als Negativform zu dem transparenten ersten Werkstück mit Entformungstoleranzen und einer ebenen Fläche, die sich orthogonal zur Lasereintrittsseite befindet, ausgelegt. Anstatt aber oben analog zum herkömmlichem Maskenschweissen auf der der Laserquelle zugewandten Seite der Spannvorrichtung eine Maske anzuordnen, werden die nicht zu verschweissenden Flächen der Werkstücke direkt auf der Negativseite des 3D-Spannelements vorzugsweise mit einer reflektierenden Beschichtung versehen. Somit werden die Schweissinformationen unmittelbar über der Schweissebene und damit optimal übertragen. Gleichzeitig wird unmittelbar über der Schweissebene angedrückt Der 3D-Stempel wird somit zu einer 3D-Maske erweitert.

Zum Zweiten, das Spannelement der Spanneinrichtung als 3D-Stempel auszuführen, der aus für die Laserstrahlung transparentem Kunststoff besteht. Dieser wird als Negativform zu dem transparenten ersten Werkstück mit Entformungstoleranzen und einer ebenen Fläche, die sich orthogonal zur Lasereintrittsseite befindet, ausgelegt. Anstatt aber oben analog zum herkömmlichem Maskenschweissen auf der der Laserquelle zugewandten Seite der Spannvorrichtung eine Maske anzuordnen, werden die nicht zu verschweissenden Flächen der Werkstücke direkt auf der dem zweiten absorbierenden Werkstück zugewandten Seite des für Laserlicht transparenten 3D-Werkstücks, d.h. auf der dem 3D-Stempel abgewandten Seite des ersten Werkstücks, vorzugsweise mit einer reflektierenden Beschichtung versehen. Das erste 3D-Werkstück wird somit zu einer 3D-Maske erweitert.

Zum Dritten, für den Fall, dass das erste Werkstück als von einem 3D-Werkstück gebildet ist, das auf der zu der Laserquelle weisenden Seite vollkommen eben ausgebildet ist, das Spannelement der Spanneinrichtung als 2D-Stempel auszuführen, der aus für die Laserstrahlung transparentem Material besteht. Dieser wird entsprechend zu dem transparenten ersten Werkstück einer ebenen Fläche, die sich orthogonal zur Lasereintrittsseite befindet, ausgelegt. Anstatt aber oben analog zum herkömmlichem Maskenschweissen auf der der Laserquelle zugewandten Seite der Spannvorrichtung eine Maske anzuordnen, werden die nicht zu verschweissenden Flächen der Werkstücke direkt auf der dem zweiten absorbierenden Werkstück zugewandten Seite des für Laserlicht transparenten 3D-Werkstücks, d.h. auf der dem 2D-Stempel abgewandten Seite des ersten Werkstücks, vorzugsweise mit einer reflektierenden Beschichtung versehen. Das erste 3D-Werkstück wird somit zu einer 3D-Maske erweitert.

Die Vorteile der Erfindung sind ein verbessertes Maskenschweißverfahren, das insbesondere zum Verbinden von verschiedenen Werkstücken aus Kunststoff oder Kunststoff mit anderen Materialien vorgesehen ist, bei dem zumindest das erste der Laserquelle zugewandte Werkstück ein für Laserlicht transparentes 3D-Werkstück ist, indem es höhere Geschwindigkeiten als das herkömmliche Maskenschweißen, ermöglicht, da die Abbildungsinformation näher an dem zweiten absorbierenden Laserlicht absorbierenden Werkstück liegt, das als 2D- oder als 3D-Werkstück ausgebildet sein kann.

Nachfolgend wird die Erfindung anhand mehrerer in der Zeichnung dargestellten Ausführungsbeispielen näher erläutert. Weitere Merkmale der Erfindung ergeben sich aus der folgenden Beschreibung des Ausführungsbeispiels der Erfindung in Verbindung mit den Ansprüchen und der beigefügten Zeichnung. Die einzelnen Merkmale der Erfindung können für sich allein oder zu mehreren bei unterschiedlichen Ausführungsformen der Erfindung verwirklicht sein. Es zeigen in schematischer Darstellung in Querschnittsdarstellung:

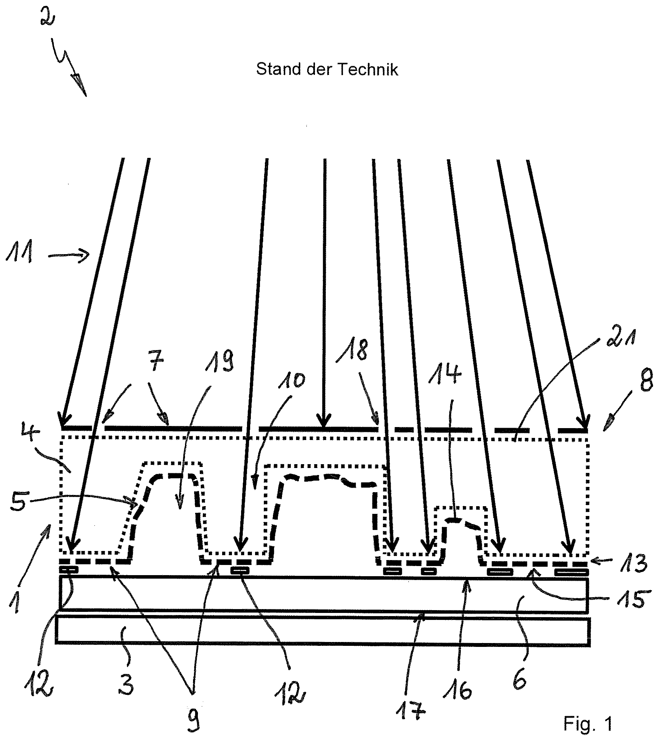

- Figur 1: eine Spanneinrichtung einer aus dem Stand der Technik bekannten Laserfügevorrichtung, mit zwei zwischen einem Stützelement und einem Spannelement der Spanneinrichtung gespannten Werkstücken, wobei das erste Werkstück ein 3D- und das zweite Werkstück ein 2D-Werkstück ist, und die Maskenstrukturen an einer Maske ausgebildet sind, die oberhalb des ersten Werkstücks angeordnet ist, und wobei sich die Verbindungskontaktflächen im Bereich der Vertiefungen des ersten Werkstücks befinden;

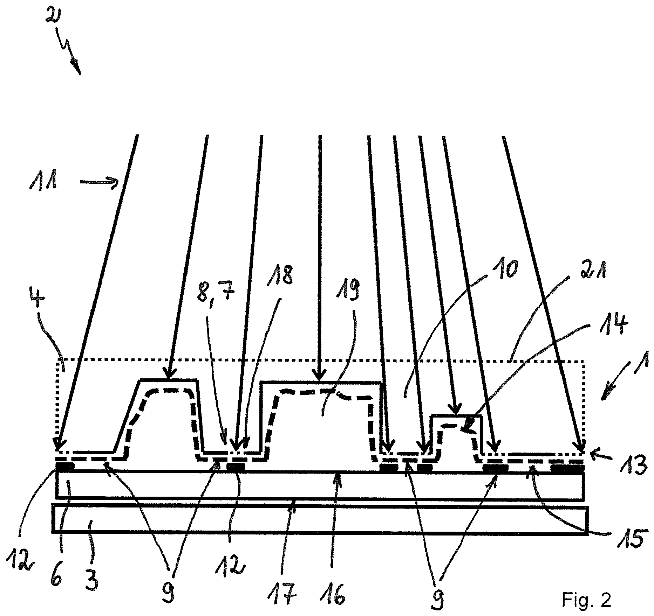

- Figur 2: eine Spanneinrichtung der erfindungsgemäßen Laserfügevorrichtung, mit zwei zwischen einem Stützelement und einem Spannelement der Spanneinrichtung gespannten Werkstücken, wobei das erste Werkstück ein 3D- und das zweite Werkstück ein 2D-Werkstück ist, und die Maskenstrukturen an der dem ersten Werkstück zugewandten Anlageseite des Spannelements ausgebildet sind, und wobei sich die Verbindungskontaktflächen im Bereich der Vertiefungen des ersten Werkstücks befinden und die Maske Laserlicht durchlässige Maskenstrukturstellen aufweist, die sich im Bereich der Vertiefungen des ersten Werkstücks befinden;

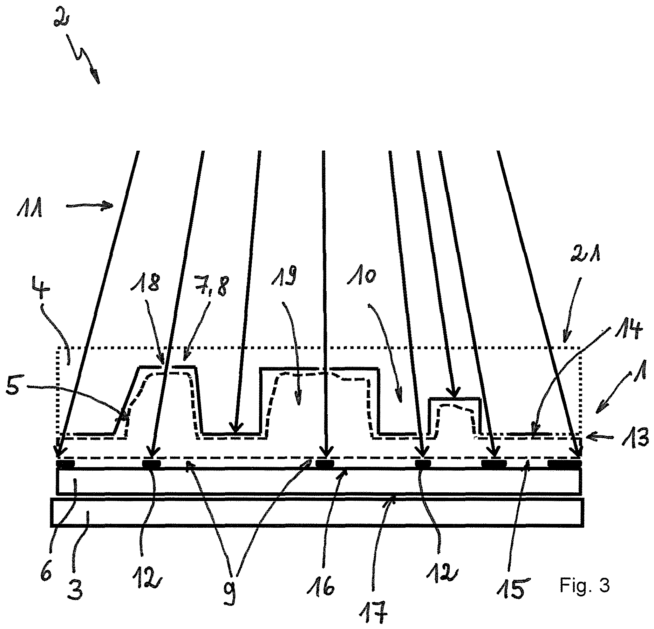

- Figur 3: eine Spanneinrichtung der erfindungsgemäßen Laserfügevorrichtung, mit zwei zwischen einem Stützelement und einem Spannelement der Spanneinrichtung gespannten Werkstücken, wobei das erste Werkstück ein 3D- und das zweite Werkstück ein 2D-Werkstück ist, und die Maskenstrukturen an der dem ersten Werkstück zugewandten Anlageseite des Spannelements ausgebildet sind, und wobei sich die Verbindungskontaktflächen im Bereich der Erhöhungen und Vertiefungen des ersten Werkstücks befinden und die Maske Laserlicht durchlässige Maskenstrukturstellen aufweist, die sich im Bereich der Erhöhungen und Vertiefungen des ersten Werkstücks befinden;

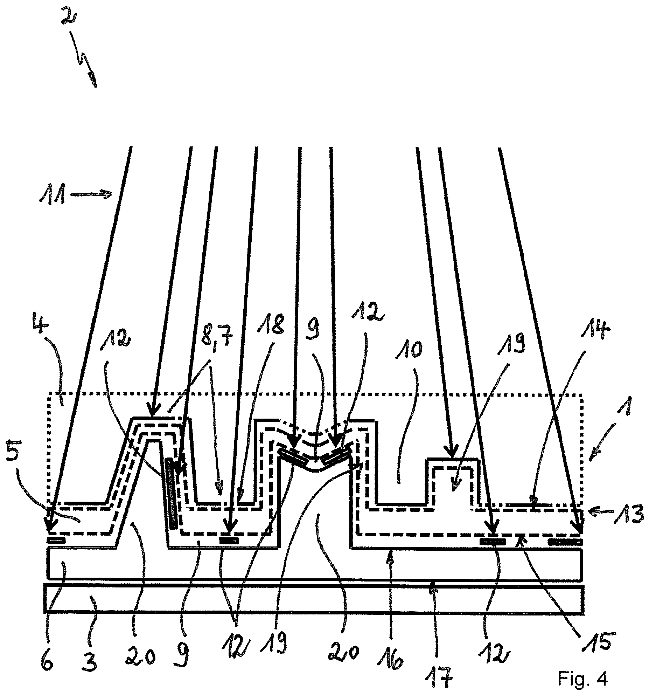

- Figur 4: eine Spanneinrichtung der erfindungsgemäßen Laserfügevorrichtung, mit zwei zwischen einem Stützelement und einem Spannelement der Spanneinrichtung gespannten Werkstücken, wobei das erste Werkstück und das zweite Werkstück ein 3D-Werkstück ist und die Maskenstrukturen an der dem ersten Werkstück zugewandten Anlageseite des Spannelements ausgebildet sind, und wobei sich die Verbindungskontaktflächen im Bereich der Vertiefungen und der Erhöhungen des ersten Werkstücks befinden und die Maske Laserlicht durchlässige Maskenstrukturstellen aufweist, die sich im Bereich der Vertiefungen und Erhöhungen des ersten Werkstücks befinden; und

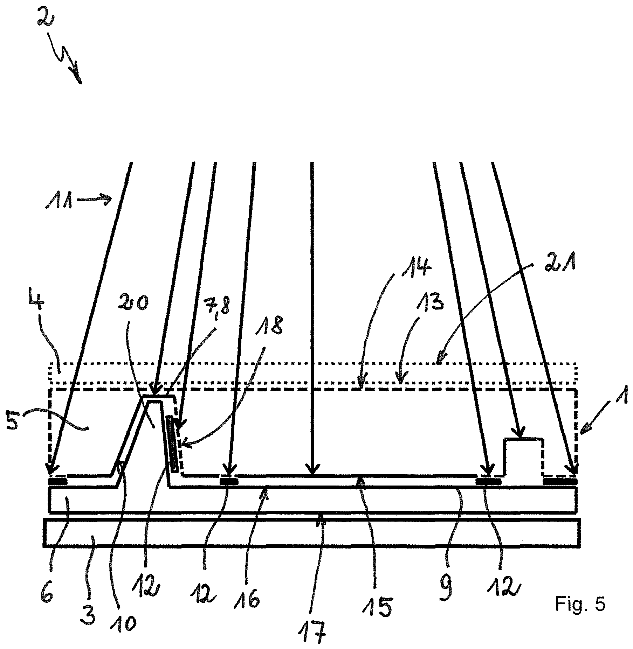

- Figur 5: eine Spanneinrichtung der erfindungsgemäßen Laserfügevorrichtung, mit zwei zwischen einem Stützelement und einem Spannelement der Spanneinrichtung gespannten Werkstücken, wobei das erste Werkstück und das zweite Werkstück ein 3D-Werkstück ist, das erste Werkstück in Richtung des Spannelements eben ausgeführt ist und die Maskenstrukturen an der dem zweiten Werkstück zugewandten zweiten Konturseite ersten Werkstücks ausgebildet sind, und wobei sich die Verbindungskontaktflächen im Bereich von Erhöhungen einer ersten zum ersten Werkstück weisenden Werkstückseite des zweiten Werkstücks und daneben befinden.

Die Figur 1 zeigt eine Spanneinrichtung 1 einer aus dem Stand der Technik bekannten Laserfügevorrichtung 2, mit zwei zwischen einem Stützelement 3 und einem Spannelement 4 der Spanneinrichtung 1 gespannten Werkstücken 5, 6, wobei das erste Werkstück 5 ein 3D- und das zweite Werkstück 6 ein 2D-Werkstück ist, und die Maskenstrukturen 7 in einer Maske 8 ausgebildet sind, die oberhalb des ersten Werkstücks 5 angeordnet ist, und wobei sich die Verbindungskontaktflächen 9 im Bereich von Vertiefungen 10 des ersten Werkstücks 5 befinden. Auf die Maske 8 mit den Maskenstrukturen 7 ist ein linienförmig geformter Laserstrahl 11 gerichtet, der von einer in der Figur nicht gezeigten Laserquelle ausgeht und relativ zu den Werkstücken 5, 6 und der Maske 8 bewegt wird. Das der Laserquelle 11 zugewandte erste Werkstück 5 besteht aus einem für den Laserstrahl 11 transparenten Material und das andere zweite Werkstück 6 aus einem für den Laserstrahl 11 absorbierenden Material. Die Maske 8 ist in dem den Verbindungskontaktflächen 9 zugeordneten Bereich - im Ausführungsbeispiel teilweise - lichtdurchlässig, sodass die aneinander angrenzenden zu verbindenden Verbindungskontaktflächen 9 der beiden Werkstücke 5, 6 unter Einwirkung des Laserstrahl 11 aufschmelzen und bei der anschließenden Abkühlung unter Druckausübung mittels der Spanneinrichtung 1 sich miteinander verbinden, wobei Schweißnähte 12 gebildet werden. Das Spannelement 4 ist für Laserlicht durchlässig ausgeführt und als Negativform des 3D-Werkstücks 5 ausgebildet. Es weist auf der dem ersten Werkstück 5 zugewandten Seite eine Anlageseite 13 auf, die in Anlage an einer ersten Konturseite 14 des ersten Werkstücks 5 gehalten ist. Das Spannelement 4 weist zudem eine dem ersten Werkstück 5 abgewandte Seitenfläche 21 auf, die eben ausgebildet ist. Das erste Werkstück 5 weist eine der ersten Konturseite 14 gegenüberliegende zweite Konturseite 15 auf, die dem zweiten Werkstücks 6 zugewandt ist und der eine erste Werkstückseite 16 des zweiten Werkstücks 6 zugeordnet ist. Das zweite Werkstück 6 weist eine zweite Werkstückseite 17 auf, die der ersten Werkstückseite 16 gegenüberliegt, mit dem sich das Werkstück 6 auf dem Stützelement 3 abstützt.

Für die folgende Beschreibung der Ausführungsbeispiele der Erfindung werden für identische Komponenten/Bezeichnungen die für den Stand der Technik verwendeten Bezugsziffern verwendet. Der Aufbau der Spannvorrichtung 1 und die Form der Werkstücke 5, 6 entsprechen im Wesentlichen dem Stand der Technik, jedoch ist die Position der Maske 8 abweichend davon.

Die Figur 2 zeigt eine Spanneinrichtung 1 einer erfindungsgemäßen Laserfügevorrichtung 2, mit zwei zwischen einem Stützelement 3 und einem Spannelement 4 der Spanneinrichtung 1 gespannten Werkstücken 5, 6, wobei das erste Werkstück 5 ein 3D- und das zweite Werkstück 6 ein 2D-Werkstück ist, und die Maskenstrukturen 7 einer Maske 8 an dem Spannelement 4 auf der Anlageseite 13 für die erste Konturseite 14 des ersten Werkstücks 5 ausgebildet sind. Damit ist die Maske 8 nicht, wie beim Stand der Technik, oberhalb des ersten Werkstücks 5 mit Abstand angeordnet, der dort durch das Spannelement 4 bedingt ist, sondern unmittelbar nahe der ersten Konturseite 14 des ersten Werkstücks 5, wobei sich die Verbindungskontaktflächen 9 im Bereich der Vertiefungen 10 des ersten Werkstücks 5 an der zweiten Konturseite 15 des Werkstücks 5 und an der ersten Werkstückseite 16 des Werkstücks 6 befinden. Auf das Spannelement 4 mit der Maskenstrukturen 7 aufweisenden Maske 8 ist ein linienförmig geformter Laserstrahl 11 gerichtet, der von einer in der Figur nicht gezeigten Laserquelle ausgeht und relativ zu den Werkstücken 5, 6 und dem Spannelement 4 bewegt wird. Das der Laserquelle 11 zugewandte erste Werkstück 5 besteht aus einem für den Laserstrahl 11 transparenten Material und das andere zweite Werkstück 6 aus einem für den Laserstrahl 11 absorbierenden Material. Die Maske 8 ist im Bereich der Verbindungskontaktflächen 9 lichtdurchlässig, sodass die aneinander angrenzenden zu verbindenden Verbindungskontaktflächen 9 der beiden Werkstücke 5, 6 unter Einwirkung des Laserstrahl 11 aufschmelzen und bei der anschließenden Abkühlung unter Druckausübung mittels der Spanneinrichtung 1 sich miteinander verbinden, wobei Schweißnähte 12 gebildet werden. Das Spannelement 4 ist für Laserlicht durchlässig ausgeführt und als Negativform des 3D-Werkstücks 5 ausgebildet, wobei die Maske 8 Laserlicht durchlässige Maskenstrukturstellen 18 aufweist, die sich im Bereich der Vertiefungen 10 der ersten Konturseite 14 des ersten Werkstücks 5 auf der Anlageseite 13 des Spannelements 4 befinden.

Die Figur 3 zeigt eine Spanneinrichtung 1 einer erfindungsgemäßen Laserfügevorrichtung 2, die weitgehend der vorstehend beschriebenen Ausführungsform gemäß der Figur 2 entspricht. Einziger Unterschied dazu ist, dass die Maske 8 Laserlicht durchlässige Maskenstrukturstellen 18 aufweist, sich nicht nur im Bereich der Vertiefungen 10 des ersten Werkstücks 5 befinden, sondern auch im Bereich von Erhöhungen 19 der ersten Konturseite 14 des ersten Werkstücks 5 vorgesehen sind.

Die Figur 4 veranschaulicht eine Spanneinrichtung 1 einer erfindungsgemäßen Laserfügevorrichtung 2, die sich aus der Kombination der vorstehend beschriebenen Ausführungsformen gemäß den Figuren 2, 3 ergibt, wobei das das erste Werkstück 5 und das zweite Werkstück 6 ein 3D-Werkstück ist. Dabei sind die Maskenstrukturen 7 an der dem ersten Werkstück 5 zugewandten Anlageseite 13 des Spannelements 4 ausgebildet, wobei sich die Verbindungskontaktflächen 9 im Bereich der Vertiefungen 10 und der Erhöhungen 18 des ersten Werkstücks 5 vorgesehen sind. Die Maske 8 weist Laserlicht durchlässige Maskenstrukturstellen 18 auf, die sich im Bereich der Vertiefungen 10 und der Erhöhungen 19 des ersten Werkstücks 5 befinden. Das zweite Werkstück 6 weist an der zu dem ersten Werkstück 5 gerichteten Werkstückseite 16 Erhöhungen 20 auf, die in die Erhöhungen 19 des ersten Werkstücks 5 von der zweiten Konturseite 15 des ersten Werkstücks 5 her eingreifen.

Die Figur 5 stellt eine Spanneinrichtung 1 einer erfindungsgemäßen Laserfügevorrichtung 2 dar, die, als Variante der in der Figur 4 beschrieben Ausführungsform, möglich ist, wenn das erste Werkstück 5 in Richtung des Spannelements 4 eben ausgeführt ist, d.h. wenn das Werkstück 5 eine ebene erste Konturseite 14 aufweist. Das erste Werkstück 5 weist dabei Vertiefungen 10 an seiner zweiten Konturseite 15 auf, in die von der ersten Werkstückseite 16 abstehende Erhöhungen 20 des zweiten Werkstücks 6 eingreifen. Die Anlageseite 13 des Spannelements 4 ist erfindungsgemäß generell bei allen Ausführungsformen an die erste Konturseite 14 des ersten Werkstücks 5 angepasst, sodass die Anlageseite 13 des Spannelements 4 ebenfalls eben ausgebildet ist. Somit kann als Spannelement 4 eine Spannplatte mit zwei planparallelen Seiten verwendet werden. Jedoch sind in diesem Fall die Maskenstrukturen 7 nicht an der Anlageseite 13 des Spannelements 4 vorgesehen, sondern sind an der dem zweiten Werkstück 6 zugewandten zweiten Konturseite 15 ersten Werkstücks 5 ausgebildet und wobei sich die Verbindungskontaktflächen 9 im Bereich der Vertiefungen 10 des ersten Werkstücks 5 und von Erhöhungen 20 des zweiten Werkstücks 6 sowie daneben befinden.

## Patentansprüche

1. Laserfügeverfahren zum Verbinden von verschiedenen Werkstücken (5, 6) aus Kunststoff oder Kunststoff mit anderen Materialien, wobei das der Laserquelle zugewandte erste Werkstück (5) aus einem für einen Laserstrahl (11) transparenten Material und das andere zweite Werkstück aus einem für den Laserstrahl (11) absorbierenden Material oder aus einem für den Laserstrahl (11) transparenten Material mit einer absorbierenden Beschichtung oder mit einer absorbierenden Zwischenfolie besteht, sodass die aneinander angrenzenden Verbindungskontaktflächen (9) der beiden Werkstücke (5, 6) unter Einwirkung von Laserlicht aufschmelzen und bei der anschließenden Abkühlung unter Druckausübung sich miteinander verbinden, und die zu verbindenden Werkstücke zur Druckausübung mittels einer Spanneinrichtung (1) aneinander gepresst werden, wozu die Werkstücke (5, 6) zwischen einem Stützelement (3) und einem mit einer Spannkraft beaufschlagbaren, das erste Werkstück (5) übergreifenden sowie für Laserlicht größtenteils transparenten Spannelement (4) angeordnet werden, und wobei eine Maskenstrukturen (7) aufweisende Maske (8) verwendet wird, die nur im Bereich der Verbindungskontaktflächen (9) für Laserlicht durchlässig ist, um bei dem zweiten Werkstück (6) lediglich die Verbindungskontaktflächen (9) zu plastifizieren, wobei die Maskenstrukturen (7) größer sind als die verwendete Wellenlänge des Laserstrahls (11), und der Laserstrahl (11) entweder linienförmig geformt und relativ zu den Werkstücken (5, 6) und der Maske (8) bewegt wird oder flächig geformt und stillstehend auf die Werkstücke (5, 6) und die Maske (8) gerichtet wird, und wobei zumindest das der Laserquelle zugewandte erste Werkstück (5) von einem dreidimensionalen Formteil gebildet wird, das zumindest auf der dem Spannelement (4) zugewandten ersten Konturseite (14) und/oder auf der dem zweiten Werkstück (6) zugewandten zweiten Konturseite (15) uneben ist und das Spannelement (4) an seiner Anlageseite (13) für das erste Werkstück (5) an die erste Konturseite (14) des ersten Werkstücks (5) angepasst ist, **dadurch gekennzeichnet, dass** die Maskenstrukturen (7) an der dem ersten Werkstück (5) zugewandten Anlageseite (13) des Spannelements(4) und/oder an der dem zweiten Werkstück (6) zugewandten zweiten Konturseite (15) des ersten Werkstücks (5) ausgebildet werden.

2. Verfahren nach Anspruch 1, **dadurch gekennzeichnet, dass** für die Ausbildung der Maskenstrukturen (7) für Laserlicht undurchlässiges Material auf die dem ersten Werkstück (5) zugewandte Anlageseite (13) des Spannelements(4) und/oder auf die dem zweiten Werkstück (6) zugewandte zweite Konturseite(15) des ersten Werkstücks (5) aufgebracht wird.

3. Verfahren nach Anspruch 2, **dadurch gekennzeichnet, dass** für die Ausbildung der Maskenstrukturen (7) Laserlicht reflektierendes Material verwendet wird.

4. Verfahren nach einem der vorangegangenen Ansprüche, **dadurch gekennzeichnet, dass** die der Laserquelle zugewandte Seitenfläche (21) des Spannelements(4) eben ausgebildet wird und dass die Laserstrahlung näherungsweise senkrecht auf diese Seitenfläche (21) gerichtet wird.

5. Verfahren nach einem der vorangegangenen Ansprüche, **dadurch gekennzeichnet, dass** die Anlageseite (13) des Spannelements(4) für die zugewandte erste Konturseite (14) des ersten Werkstücks (5) zumindest teilweise als Negativform der zugewandten ersten Konturseite (14) des ersten Werkstücks (5) ausgeführt wird.

6. Laserfügesystem umfassend eine Laserfügevorrichtung, eine Maske sowie ein erstes und ein anderes zweites Werkstück, wobei die Laserfügevorrichtung (2) zum Verbinden von verschiedenen Werkstücken (5, 6) aus Kunststoff oder Kunststoff mit anderen Materialien ausgebildet ist, wobei das der Laserquelle zugewandte erste Werkstück (5) aus einem für einen Laserstrahl (11) transparenten Material und das andere zweite Werkstück (6) aus einem für den Laserstrahl (11) absorbierenden Material oder aus einem für den Laserstrahl (11) transparenten Material mit einer absorbierenden Beschichtung oder mit einer absorbierenden Zwischenfolie besteht, sodass die aneinander angrenzenden Verbindungskontaktflächen (9) der beiden Werkstücke (5, 6) unter Einwirkung von Laserlicht aufschmelzen und bei der anschließenden Abkühlung unter Druckausübung sich miteinander verbinden, und zur Druckausübung auf die zu verbindenden Werkstücke (5, 6) eine Spanneinrichtung (1) ausgebildet ist, die die Werkstücke (5, 6) aneinander presst, wozu die Werkstücke (5, 6) zwischen einem Stützelement (3) und einem mit einer Spannkraft beaufschlagbaren, das erste Werkstück (5) übergreifenden sowie für Laserlicht größtenteils transparenten Spannelement (4) anordenbar sind, und wobei die Maske Maskenstrukturen (7) aufweist und nur im Bereich der Verbindungskontaktflächen (9) für Laserlicht durchlässig ist, um beim dem zweiten Werkstück (6) lediglich die Verbindungskontaktflächen (7) zu plastifizieren, wobei die Maskenstrukturen (9) größer sind als die verwendete Wellenlänge des Laserstrahls (11), und der Laserstrahl (11) entweder linienförmig geformt und relativ zu den Werkstücken (5, 6) und der Maske (8) bewegbar ist oder flächig geformt auf die Werkstücke (5, 6) und die Maske (8) stillstehend richtbar ist, und wobei zumindest das der Laserquelle zugewandte erste Werkstück (5) von einem dreidimensionalen Formteil gebildet ist, das zumindest auf der dem Spannelement (4) zugewandten ersten Konturseite (14) und/oder auf der dem zweiten Werkstück (6) zugewandten zweiten Konturseite (15) uneben ist und das Spannelement (4) an seiner Anlageseite (13) für das erste Werkstück (5) an die erste Konturseite (14) des ersten Werkstücks (14) angepasst ist, **dadurch gekennzeichnet,** die Maskenstrukturen (7) an der dem ersten Werkstück (5) zugewandten Anlageseite (13) des Spannelements(4) und/oder an der dem zweiten Werkstück (6) zugewandten zweiten Konturseite (15) des ersten Werkstücks (5) ausgebildet sind.

7. Laserfügesystem nach Anspruch 6, **dadurch gekennzeichnet, dass** die ausgebildeten Maskenstrukturen (7) Laserlicht undurchlässiges Material aufweisen, die an der dem ersten Werkstück (5) zugewandten Anlageseite (13) des Spannelements(4) oder an der dem zweiten Werkstück (6) zugewandten zweiten Konturseite (15) des ersten Werkstücks (5) angeordnet ist.

8. Laserfügesystem nach Anspruch 7, **dadurch gekennzeichnet, dass** die ausgebildeten Maskenstrukturen (7) Laserlicht reflektierendes Material aufweisen.

9. Laserfügesystem nach einem der vorangegangenen Ansprüche 6 bis 8, **dadurch gekennzeichnet, dass** die der Laserquelle zugewandte Seitenfläche (21) des Spannelements(4) eben ausgebildet ist und dass die Laserstrahlung näherungsweise senkrecht auf diese Seitenfläche (21) gerichtet ist.

10. Laserfügesystem nach einem der vorangegangenen Ansprüche 6 bis 9, **dadurch gekennzeichnet, dass** die Anlageseite (13) des Spannelements(4) für die zugewandte erste Konturseite (14) des ersten Werkstücks (5) zumindest teilweise als Negativform der zugewandten ersten Konturseite (14) des ersten Werkstücks (5) ausgeführt ist.

## Claims

1. A laser joining method for bonding different workpieces (5, 6) made of plastic material, or plastic material together with other materials, the first workpiece (5) facing the laser source being made of a material transparent to a laser beam (11) and the other second workpiece being made of a material absorbent to the laser beam (11), or a material that is transparent to the laser beam (11) and includes an absorbing coating or an absorbing intermediate film, so that the bonding contact faces (9) of the two workpieces (5, 6) abutting one another melt under the action of laser light and bond to one another during the subsequent cooling process under pressure application, the workpieces to be bonded being pressed against one another by a clamping device (1) for pressure application, for which purpose the workpieces (5, 6) are disposed between a support element (3) and a clamping element (4), to which a clamping force can be applied and which extends across the first workpiece (5) and is substantially transparent to laser light, and a mask (8) having mask structures (7) being used, which allows laser light to pass only in the region of the bonding contact faces (9) so as to plasticize only the bonding contact faces (9) on the second workpiece (6), the mask structures (7) being larger than the wavelength of the laser beam (11) used, and the laser beam (11) being either line-shaped and moved relative to the workpieces (5, 6) and the mask (8), or being areal and directed in a stationary manner at the workpieces (5, 6) and the mask (8), and at least the first workpiece (5) facing the laser source being formed by a three-dimensional moulded part, which is not planar at least on the first contour side (14) facing the clamping element (4) and/or on the second contour side (15) facing the second workpiece (6), and the clamping element (4) being adapted, on the bearing side (13) thereof for the first workpiece (5), to the first contour side (14) of the first workpiece (5), **characterized in that** the mask structures (7) are created on the bearing side (13) of the clamping element (4) facing the first workpiece (5) and/or on the second contour side (15) of the first workpiece (5) facing the second workpiece (6).

2. The method according to claim 1, **characterized in that** for creating the mask structures (7) material that does not allow laser light to pass is applied to the bearing side (13) of the clamping element (4) facing the first workpiece (5) and/or to the second contour side (15) of the first workpiece (5) facing the second workpiece (6).

3. The method according to claim 2, **characterized in that** material reflecting laser light is used to create the mask structures (7).

4. A method according to any one of the preceding claims, **characterized in that** the lateral surface (21) of the clamping element (4) facing the laser source has a planar design, and the laser radiation is directed approximately perpendicularly at this lateral surface (21).

5. A method according to any one of the preceding claims, **characterized in that** the bearing side (13) of the clamping element (4) for the facing first contour side (14) of the first workpiece (5) is at least partially implemented as a negative mould of the facing first contour side (14) of the first workpiece (5).

6. Laser joining system comprising a laser joining device, a mask and a first and a second workpiece, wherein the laser joining device (2) is designed for bonding different workpieces (5, 6) made of plastic material, or plastic material together with other materials, the first workpiece (5) facing the laser source being made of a material transparent to a laser beam (11) and the other second workpiece (6) being made of a material absorbent to the laser beam (11), or a material that is transparent to the laser beam (11) and includes an absorbing coating or an absorbing intermediate film, so that the bonding contact faces (9) of the two workpieces (5, 6) abutting one another melt under the action of laser light and bond to one another during the subsequent cooling process under pressure application, a clamping device (1) being formed for applying pressure to the workpieces (5, 6) to be bonded, which presses the workpieces (5, 6) against one another, for which purpose the workpieces (5, 6) can be disposed between a support element (3) and a clamping element (4), to which a clamping force can be applied and which extends across the first workpiece (5) and is substantially transparent to laser light, the mask (8) having mask structures (7) which allows laser light to pass only in the region of the bonding contact faces (9) so as to plasticize only the bonding contact faces (9) on the second workpiece (6), wherein the mask structures (7) are larger than the wavelength of the laser beam (11) used, and the laser beam (11) is either line-shaped and movable relative to the workpieces (5, 6) and the mask (8), or is areal and directable in a stationary manner at the workpieces (5, 6) and the mask (8), and at least the first workpiece (5) facing the laser source being formed by a three-dimensional moulded part, which is not planar at least on the first contour side (14) facing the clamping element (4) and/or on the second contour side (15) facing the second workpiece (6), and the clamping element (4) is adapted, on the bearing side (13) thereof for the first workpiece (5), to the first contour side (14) of the first workpiece (5), **characterized in that** the mask structures (7) are created on the bearing side (13) of the clamping element (4) facing the first workpiece (5) and/or on the second contour side (15) of the first workpiece (5) facing the second workpiece (6).

7. The laser joining system device according to claim 6, **characterized in that** the created mask structures (7) comprise material that does not allow laser light to pass, which is disposed on the bearing side (13) of the clamping element (4) facing the first workpiece (5) or on the second contour side (15) of the first workpiece (5) facing the second workpiece (6).

8. The laser joining system device according to claim 7, **characterized in that** the created mask structures (7) comprise material reflecting laser light.

9. A laser joining system according to any one of the preceding claims 6 to 8, **characterized in that** the lateral surface (21) of the clamping element (4) facing the laser source has a planar design, and the laser radiation is directed approximately perpendicularly at this lateral surface (21).

10. A laser joining system according to any one of the preceding claims 6 to 9, **characterized in that** the bearing side (13) of the clamping element (4) for the facing first contour side (14) of the first workpiece (5) is at least partially implemented as a negative mould of the facing first contour side (14) of the first workpiece (5).

## Revendications

1. Procédé d'assemblage par laser pour assembler différentes pièces (5, 6) en matière plastique ou en matière plastique avec d'autres matériaux, dans lequel la première pièce (5) tournée vers la source laser est constituée d'un matériau transparent à un faisceau laser (11) et l'autre ou deuxième pièce est constituée d'un matériau absorbant le faisceau laser (11) ou d'un matériau transparent au faisceau laser (11) muni d'un revêtement absorbant ou d'un film intermédiaire absorbant, de sorte que les surfaces de contact d'assemblage adjacentes (9) des deux pièces (5, 6) entrent en fusion sous l'action de la lumière laser et s'assemblent l'une à l'autre lors du refroidissement ultérieur sous application d'une pression, et, pour l'application d'une pression, les pièces à assembler sont pressées l'une contre l'autre au moyen d'un dispositif de serrage (1), les pièces (5, 6) étant disposées à cet effet entre un élément d'appui (3) et un élément de serrage (4) qui peut être soumis à une force de serrage, recouvre la première pièce (5) et est en grande partie transparent à la lumière laser, et dans lequel on utilise un masque (8) présentant des structures de masquage (7), qui n'est transparent à la lumière laser que dans la zone des surfaces de contact d'assemblage (9) afin de plastifier seulement les surfaces de contact d'assemblage (9) sur la deuxième pièce (6), dans lequel les structures de masquage (7) sont plus grandes que la longueur d'onde utilisée du faisceau laser (11) et le faisceau laser (11) est soit de forme linéaire et déplacé par rapport aux pièces (5, 6) et au masque (8), soit de forme plane et dirigé de manière stationnaire vers les pièces (5, 6) et le masque (8), et dans lequel au moins la première pièce (5) tournée vers la source laser est formée par une pièce moulée tridimensionnelle, qui est irrégulière au moins sur le premier côté de contour (14) tourné vers l'élément de serrage (4) et/ou sur le deuxième côté de contour (15) tourné vers la deuxième pièce (6), et l'élément de serrage (4) est adapté sur son côté d'application (13) pour la première pièce (5) au premier côté de contour (14) de la première pièce (5), **caractérisé en ce que** les structures de masquage (7) sont formées sur le côté d'application (13) de l'élément de serrage (4) tourné vers la première pièce (5) et/ou sur le deuxième côté de contour (15) de la première pièce (5) tourné vers la deuxième pièce (6).

2. Procédé selon la revendication 1, **caractérisé en ce que**, pour la formation des structures de masquage (7), un matériau opaque à la lumière laser est appliqué sur le côté d'application (13) de l'élément de serrage (4) tourné vers la première pièce (5) et/ou sur le deuxième côté de contour (15) de la première pièce (5) tourné vers la deuxième pièce (6).

3. Procédé selon la revendication 2, **caractérisé en ce qu'**on utilise un matériau réfléchissant la lumière laser pour former les structures de masquage (7).

4. Procédé selon l'une des revendications précédentes, **caractérisé en ce que** la surface latérale (21) de l'élément de serrage (4) tournée vers la source laser est plane et que le rayonnement laser est dirigé à peu près perpendiculairement à cette surface latérale (21).

5. Procédé selon l'une des revendications précédentes, **caractérisé en ce que** le côté d'application (13) de l'élément de serrage (4) pour le premier côté de contour (14) de la première pièce (5) tourné vers lui est conçu au moins partiellement comme une forme négative du premier côté de contour (14) de la première pièce (5) tourné vers lui.

6. Système d'assemblage par laser comprenant un dispositif d'assemblage par laser, un masque ainsi qu'une première et une autre ou deuxième pièce, dans lequel le dispositif d'assemblage par laser (2) est conçu pour assembler différentes pièces (5, 6) en matière plastique ou en matière plastique avec d'autres matériaux, dans lequel la première pièce (5) tournée vers la source laser est constituée d'un matériau transparent à un faisceau laser (11) et l'autre ou deuxième pièce est constituée d'un matériau absorbant le faisceau laser (11) ou d'un matériau transparent au faisceau laser (11) muni d'un revêtement absorbant ou d'un film intermédiaire absorbant, de sorte que les surfaces de contact d'assemblage adjacentes (9) des deux pièces (5, 6) entrent en fusion sous l'action de la lumière laser et s'assemblent l'une à l'autre lors du refroidissement ultérieur sous application d'une pression, et un dispositif de serrage (1) qui presse les pièces (5, 6) l'une contre l'autre est conçu pour appliquer une pression sur les pièces (5, 6) à assembler, les pièces (5, 6) pouvant être disposées à cet effet entre un élément d'appui (3) et un élément de serrage (4) qui peut être soumis à une force de serrage, recouvre la première pièce (5) et est en grande partie transparent à la lumière laser, et le masque (8) présente des structures de masquage (7) et n'est transparent à la lumière laser que dans la zone des surfaces de contact d'assemblage (9) afin de plastifier seulement les surfaces de contact d'assemblage (9) sur la deuxième pièce (6), dans lequel les structures de masquage (7) sont plus grandes que la longueur d'onde utilisée du faisceau laser (11) et le faisceau laser (11) est soit de forme linéaire et peut être déplacé par rapport aux pièces (5, 6) et au masque (8), soit de forme plane et peut être dirigé de manière stationnaire vers les pièces (5, 6) et le masque (8), et dans lequel au moins la première pièce (5) tournée vers la source laser est formée par une pièce moulée tridimensionnelle, qui est irrégulière au moins sur le premier côté de contour (14) tourné vers l'élément de serrage (4) et/ou sur le deuxième côté de contour (15) tourné vers la deuxième pièce (6), et l'élément de serrage (4) est adapté sur son côté d'application (13) pour la première pièce (5) au premier côté de contour (14) de la première pièce (14), **caractérisé en ce que** les structures de masquage (7) sont formées sur le côté d'application (13) de l'élément de serrage (4) tourné vers la première pièce (5) et/ou sur le deuxième côté de contour (15) de la première pièce (5) tourné vers la deuxième pièce (6).

7. Système d'assemblage par laser selon la revendication 6, **caractérisé en ce que** les structures de masquage (7) formées présentent un matériau opaque à la lumière laser qui est disposé sur le côté d'application (13) de l'élément de serrage (4) tourné vers la première pièce (5) ou sur le deuxième côté de contour (15) de la première pièce (5) tourné vers la deuxième pièce (6).

8. Système d'assemblage par laser selon la revendication 7, **caractérisé en ce que** les structures de masquage (7) formées présentent un matériau réfléchissant la lumière laser.

9. Système d'assemblage par laser selon l'une des revendications 6 à 8 précédentes, **caractérisé en ce que** la surface latérale (21) de l'élément de serrage (4) tournée vers la source laser est plane et que le rayonnement laser est dirigé à peu près perpendiculairement à cette surface latérale (21).

10. Système d'assemblage par laser selon l'une des revendications 6 à 9 précédentes, **caractérisé en ce que** le côté d'application (13) de l'élément de serrage (4) pour le premier côté de contour (14) de la première pièce (5) tourné vers lui est conçu au moins partiellement comme une forme négative du premier côté de contour (14) de la première pièce (5) tourné vers lui.
